# EUROPEAN PATENT APPLICATION

(11) **EP 3 560 333 A1**
(43) Date of publication of application: **30.10.2019**
(21) Application number: 19170881.7
(22) Date of filing: 24.04.2019
(51) Int. Cl.: A01M 23/00, A01M 29/34, A01G 13/10, A01M 1/18

(54) **DEVICE AND METHOD FOR PROTECTION OF TREE SEEDLINGS**

(30) Priority: 26.04.2018 NO 20180598
(71) Applicant: Pettersen, Markus Rygh, 0467 Oslo (NO); Rygh, Mari Pettersen, 0259 Oslo (NO); Pettersen, Jarl Markus, 3257 Larvik (NO)
(72) Inventor: Pettersen, Markus Rygh, 0467 Oslo (NO); Rygh, Mari Pettersen, 0259 Oslo (NO); Pettersen, Jarl Markus, 3257 Larvik (NO)
(74) Representative: Onsagers AS

(57) **Abstract**

A protective device (10) for protection of a tree seedling (46) with a stem (49) against non-flying insects is described. The protective device (10) comprises a neck part (14) that is provided with a central, through-going opening (12) for the stem (49) where the neck part (14) is adapted to hold the protective device (10) firmly against stem (49) of the tree seedling (46). The protective device (10) further comprises a collar part (15) that projects outwards from the neck part (14) where an underside (24, 36) of the collar part (15) is provided with a layer (16) of a sticky material. The layer extends around the entire collar part (15) in a circumferential direction and over at least a part of the collar part (15) in a radial direction.

## Description

The present invention relates to a protective device for protection of a tree seedling with a stem against non-flying insects, a protective system for protection of a tree seedling with a stem against non-flying insects and a method for protecting a tree seedling with a stem against non-flying insects.

The large pine weevil (*Hylobius abietis*), a small insect the size of a fingernail, is the most destructive pest in tree planting and re-forestation of conifer forest across Europe, Russia and Asia in terms of economic damage caused.

In modern forest practice large areas of conifer are being harvested in clear cut areas. The result is many stubs in this area. The pine weevil is habituated to breed in these remaining stubs and will be attracted to the cut area by the fumes of terpenes released (i.e. the smell of newly cut forest). When the cut area is replanted with new seedlings, the problem is that the pine weevil will feed on these new seedlings and eventually kill them by ring barking them.

The pine weevil's favourite meal is the phloem under the bark of fresh conifer seedlings. This attack often starts at the base of the plant, i.e. at the root neck, but it will gradually develop the feeding pattern to the whole stem of the seedling and the result is a partly damaged seedling or often a dead seedling.

Since the 1940's and until recently the problem with the pine weevil has been solved with chemical treatment with insecticides. Most efficient was DDT and on the ban of DDT pyrethroids like permethrin replaced it. Pyrethroids are still in use and in addition neonicotinoids (linked to the disappearance of bees) are also used. Today efforts are made to remove insecticides and one method is to coat the stem of the seedling with a layer preventing the pine weevil to feed. Most commonly used is either a mixture of glue and sand or a wax coating.

A problem with these methods, however, is that the whole tree seedling cannot be coated in wax and the weevil will feed on the unprotected parts of the tree seedling.

If the planted seedlings are not protected against this insect, costs in the range of € 140 million a year for the forest industry and society may be the consequence in the European Union (EU or EU-27).

As mentioned, re-forestation practice has for many years been depending on using highly hazardous insecticides to suppress the large pine weevil problem, but now their use is becoming more restricted by new EU legislation and is strongly limited for certified wood products.

The insecticides are often highly toxic for both animals and humans and the EU aims to substitute the insecticides with non-chemical methods. Non-chemical methods means alternative methods to chemical insecticides based on forest techniques and/or physical or biological pest control methods.

The European Union, with 158 million ha taking only productive forest into account, is the sixth largest world forest area with an annual increase of almost 0.5 million ha due to intensive forestation and re-forestation activities.

Coniferous species cover 45% of the total productive forest areas in the European Union. In 2011 alone approximately 1010 million forest seedlings (pine and spruce) were planted. Of these 40% were treated with insecticides as protection against the pine weevil.

Tree planting and re-forestation is a very important part of sustainable forestry management and essential for securing access to wood as a raw material for forest-based industries. A competitive forestry output enhances the competitiveness of the industry and forest protection against pests is an integral part to achieving strong competitiveness over time.

Private forest owners manage approximately 60% of Europe's forests with an average forest size of 13 ha. This large community of private forest owners is threatened with significant economic loss due to the prohibition of hazardous chemicals as plant protection products, and face great challenges to meet the new EU Directive on Sustainable use of Pesticides (2009/128/EC), which requests the implementation of integrated pest management and that priority is given to alternative non-chemical methods of plant protection.

One proactive approach to prepare for forest practice without insecticides has been taken. The scientific objectives of this project has been to gain advanced knowledge regarding the use of wax on young seedlings by studying wax-plant interactions and testing seedling quality, investigate wax-weevil interactions and testing the protective function of the wax.

Three important goals have been set for the wax protection. Firstly, it should not affect the seedling growth negatively. Secondly, the wax cover should be plastic so it can protect a stem as it increase in thickness. Finally, the wax cover should protect the seedling against pine weevil attacks for at least two summer seasons.

The main effects and the interactions of the different wax thicknesses and heights on the development of Norway spruce seedlings has been studied during short term (weeks) and long term (month) experiments in reproducible summer conditions in environmentally controlled growth rooms.

The growth achieved during four months resembled what could be expected after three to four summer seasons in the field.

In the short term experiments the root growth capacity and shoot development were studied following standardized procedures.

Plant fitness was good for a great number of combinations of seedlings varying in size from 18cm to 28cm in height above root neck and with wax cover heights from 30% of the stem (and most of the branches) up to 100% stem height. Reduced fitness was primarily found in small seedlings with most of the shoot covered with wax.

In the long term experiment survival rate and fitness of spruce seedlings over a four month period was studied. Because these experiments were performed in growth chambers any influence from winter acclimation or frost on the plants and wax were avoided. During the long term experiment only 1.3% of the seedlings died (9 seedlings), and they were all covered with very thick and very high levels of wax, up to 100% covered. The shoot production was unchanged or reduced by less than 10% when the wax cover was 10 or 15cm high, as long as it covered less than two thirds of the shoots, leaving green shoots for good growth.

During the experimental period the stem diameter increased up to 200%, posing a great challenge to the wax plasticity. As the stem diameter increased and the wax was stretched, the layer would have to become thinner. The wax cover thickness at start influenced strongly on the cracking tendency with increased cracking when the layer was very thin (using a small quantity of wax) and reduced cracking at very thick layers (using a larger quantity of wax). A wax layer initially about 1.5 mm thick showed a low cracking tendency after four months growth experiment.

To achieve a protective period of two years the degradation of wax on lower parts of the seedling stem should be low because the insect can penetrate the top soil and feed at the root neck. In the degradation studies running for wax in soil it has been shown that the rate is highly temperature dependent of soil temperature, being very slow at 8°C, but the rate increased more than ten times at 20°C.

In laboratory experiments it was investigated how the protective effect of wax treatment is affected by varying wax thickness and height on seedlings of various sizes. In closed containers holding one waxed seedling together with four adult pine weevils feeding inside, the protective properties of wax were strongly challenged.

The performance of the wax coating, which is related both to protective properties and cracking tendency, increased with the thickness of the wax layer. The results show a threshold in protective effectiveness between 0.6mm and 1.0mm wax thickness at the lower part of the stem.

The project will enhance the level of innovation and exploitation of technology in order to improve the best-practice of pest management in the forest sector during plantation for re-forestation.

The direct economic gain of protecting the seedlings efficiently is in the range of € 140M annually in the European Union if no insecticides are allowed to be used.

There is also a direct economic gain from producing and selling certified wood, which offers new market opportunities with up to 5% higher end user prices.

There is also an indirect economic gain from an improved working environment protecting human health since there is no use of harmful chemicals and substitutes potentially harmful insecticides.

Furthermore, the project will help the forest sector to implement the EU directive on Sustainable use of Pesticides (2009/128/EC), that restricts the use of insecticides due to health and environmental issues, and demand integrated pest management with priority given to alternative non-chemical methods of plant protection.

The project will further help the forest sector to implement the EU Council Directive (EC No 1698/2005) and (EC No 74/2009) on support of rural development that demand proper water management and the protection of water quality. Currently used insecticides have strong negative impact on life in aquatic systems, insects (focus on bees) and birds, as well as human health.

The project will also help the forest sector to implement international and European standards on certified wood products such as FCS or PEFC and will help to meet the demand for certified wood products.

Tree planting and re-forestation are very important tasks in order to secure access to wood as a raw material for the forest-based industries. Wood is the highest cost for many of these industries and the growing demand for renewable energy continues to increase competition for wood. It is therefore very important to promote and secure domestic supply of the raw material "wood".

However, this project has been looking at the use of a coating of wax only. As mentioned, it is a problem the whole tree seedling cannot be coated in wax and insects such as the weevil will feed on the unprotected parts of the tree seedling. It has also been found that wax alone does not always provide sufficient protection against insects that climb up the stem of the tree seedlings and feed on the seedlings.

In WO 00/78136 A1 a protective device to prevent insects from climbing up the trunk of a seedling or the surface of a wall. The protective device is provided with a neck part and collar part that is attached to the neck part and extends downwards and outwards from the neck part when it is attached on a seedling. The protective device is provided with an insecticide that is molded into the collar part. The insecticide is slowly released and forms a vapour head below the collar part that acts as a barrier for insects and prevents insects from climbing up the seedling into the space below the collar part.

In WO 2014/170630 A1 a similar protective device is shown comprising a neck part and a collar part that extends downwards and outwards from the neck part and is adapted to protect the upper part of a seedling against pine weevils. According to the teaching of this publication, the angle between the collar part and the neck part and the lack of corners or vertices provides an outer surface that provides a barrier to insects, such as the weevil, and prevents the insects from reaching the upper part of the seedling, i.e. the part of the seedling above the protective device. The publication further stresses that, due to the means by which pads on a weevil's legs grips a surface, the outer surface of the protective device should be slightly roughened. Finally, it is mentioned that the lower part of the seedling may be coated with a wax or an adhesive.

In the publication US 2,201,643, which discloses a similar protective device to the ones disclosed in the two publications above, it is disclosed that the tree may be provided with an adhesive, deterrent compound. Similarly, in KR 20090124342 A it is disclosed that the stem surface of the lower part of an oak tree may be provided with a coating layer and an adhesion layer on the coating layer.

An objective of the present invention has therefore been to develop a way to protect tree seedlings with a stem against non-flying insects, such as the weewil.

A further object of the present invention has been to develop a device and method that is cheap and easy to implement.

A further objective has been to develop a device and method that are environmentally friendly.

These objectives are solved with a protective device as defined in independent claim 1, a protective system as defined in claim 9, a method for protecting a tree seedling as defined in independent claim 10 and uses of the protective device and the method as defined in independent claims 12 and 14. Further embodiments of the present invention are defined in dependent claims 2-8, 11, 13 and 15.

The aim has been to develop an environmentally friendly, cost efficient non-chemical pest control method against non-flying insects, and in particular the large pine weevil. The pine weevil is a very good climber and can walk upside down on a glass surface. Placing a ring of e.g. paper, plastic, metal etc. is often not enough to stop the pine weevil from passing it and thereby reaching the unprotected top of the seedling. However, we have learned that the pine weevil it will avoid a very sticky surface because the weevil's climbing feet can be harmed.

The result is a protective device that can be attached to the stem of the tree seedling to prevent the non-flying insect to crawl up the stem. Furthermore, the protective device can advantageously be provided with a layer of a sticky material that will prevent the non-flying insect to climb past the protective device. Finally, for optimal protection of the tree seedling, physical plant protection based on a highly refined wax formulation may advantageously be applied once on the main stem of conifer seedlings in the forest tree nursery before planting in the forest. Correctly performed the protection from wax will last for two years, which is the most critical time period for pine weevil attacks.

A protective device for protection of a tree seedling with a stem against non-flying insects is therefore provided where the protective device comprises a neck part that is provided with a central, through-going opening for the stem, the neck part is adapted to hold the protective collar firmly against stem of the tree seedling, and the protective device further comprises a collar part that projects outwards from the neck part. Furthermore, the underside of the collar part is provided with a layer of a sticky material, where the layer extends around the entire collar part in a circumferential direction and over at least a part of the collar part in a radial direction.

In an embodiment, the underside of the collar part may be substantially completely covered with a layer of a sticky material.

It should also be understood that the upper side of the collar part and/or the neck portion may also be provided with a layer of a sticky material in addition to or instead of the layer of sticky material provided on the underside of the collar part if that is considered necessary.

The sticky material may be a natural or synthetic resin, a synthetic polymer such as polyisobutylene, or a combination of two or more materials from these two groups, possibly with oil. It should also be understood that any other suitable material may be chosen as long as it is sufficiently sticky so that non-flying insects, such as the weevil, will avoid walking across a part of the protective device that is provided with a layer of the sticky material.

The collar part is preferably inclined downwards relative to the neck part from the neck part towards an outer circumference of the collar part when the protective device is attached to the tree seedling. This arrangement of the collar part will help to prevent branches of the tree seedling and other things getting stuck to the collar part. However, if considered advantageous, the collar part may of course be arranged so that it is substantially perpendicular to the neck part or arranged so that it is inclined upwards relative to the neck part from the neck part towards the outer circumference of the collar part when the protective device is attached to the tree seedling.

The protective device is preferably made up of a first part comprising a first collar part and a first neck part, and a second part comprising a second collar part and a second neck part, where the first collar part and the second collar part and/or the first neck part and the second neck part is provided with complementary shaped locking parts such that the first part can be securely fastened to the second part of the protective device.

Preferably the first collar part of the first part comprises a male locking member and female locking member and the second collar part of the second part comprises a male locking member that is complementary shaped to the female locking member of the first collar part, and a female locking member that is complementary shaped to the male locking member of the first collar part. Hence, corresponding male locking members and female locking members will interlock when the first collar part and the second collar part are attached to each other.

Furthermore, the corresponding male locking members and female locking members that are adapted to be interlocked when the first part and the second part of the protective device are attached to each other, are preferably designed to unlock when a certain pressure is applied to the connection of interlocked male locking members and female locking members due to increased size of the stem as the tree seedling grows.

Other locking arrangements may of course also be employed to interconnect the first part and the second part of the protective device. For example, the first part and the second part may be glued to each other or attached to each other with other fastening means.

The neck part preferably comprises a plurality of flexible elements that are adapted to press firmly against the stem of the seedling when the protective device is attached to the tree seedling. Using such flexible elements will ensure that the protective device can be used with tree seedlings having different diameters while the protective device is still firmly connected to the stems of the tree seedlings. The flexible elements will also adapt to the increasing size or diameter of the stem of the tree seedling as it grows.

The protective device may be made of a plastic material, or more preferably a biodegradable plastic material or a paper material or wood fibers. However, other materials and combination of materials may be chosen if that is deemed to be appropriate.

There is also provided a protective system for protecting a tree seedling with a stem against non-flying insects, such as weevils, where the protective system comprises a tree seedling that is provided with a protective device as described above, and the stem of the tree seedling is provided with a coating layer extending from the roots of the tree seedling to the neck part of the protective device. The coating layer is preferably made of a wax.

There is also provided a method for protecting tree seedlings with a stem against non-flying insects, wherein the tree seedling is provided with a protective device as described above.

The stem of the tree seedling may further be provided with a coating layer extending from the roots of the tree seedling to the neck part of the protective device. This will further help to protect the tree seedling from the non-flying insects, such as the weevil. The coating layer is preferably made of a wax.

A typical use of a protective device as described above, is for protection of conifer seedlings.

In particular, a use of a protective device as described above may be for protection of conifer seedlings against the pine weevil.

A typical use of a method as described above is for protection of conifer seedlings.

In particular, the use of the method as described above may be for protection of conifer seedlings against the pine weevil.

Other features and advantages of the invention will appear from the following description of a preferred, non-limiting embodiment of the invention, with reference to the figures where:
Figure 1 illustrates an embodiment of a protective device according to the present invention.
Figure 2 illustrates the second part of the embodiment of the protective device shown in figure 1.
Figure 3 illustrates the first part of the embodiment of the protective device shown in figure 1.
Figure 4 illustrates a protective device according to the present invention arranged on a tree seedling.
Figure 5 illustrates a protective device according to the present invention arranged on a tree seedling where the protective device includes a layer of a sticky material.
Figure 6 illustrates a protective device according to the present invention arranged on a tree seedling where the stem of the tree seedling between the roots and the protective device includes a coating layer.
Figure 7 illustrates a protective device according to the present invention arranged on a tree seedling where the protective device includes a layer of a sticky material and the stem of the tree seedling between the roots and the protective device includes a coating layer.

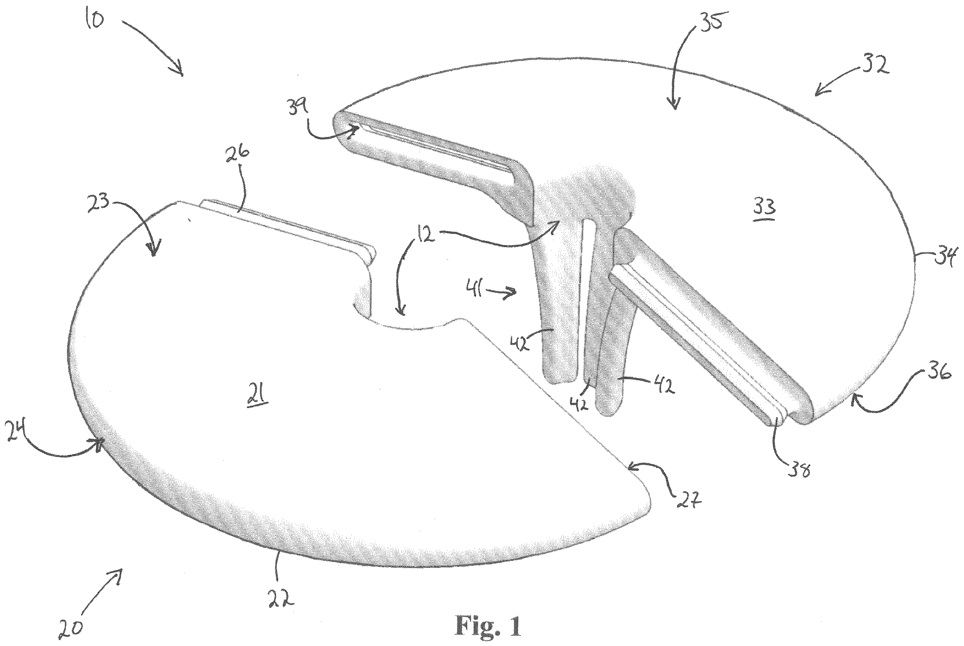

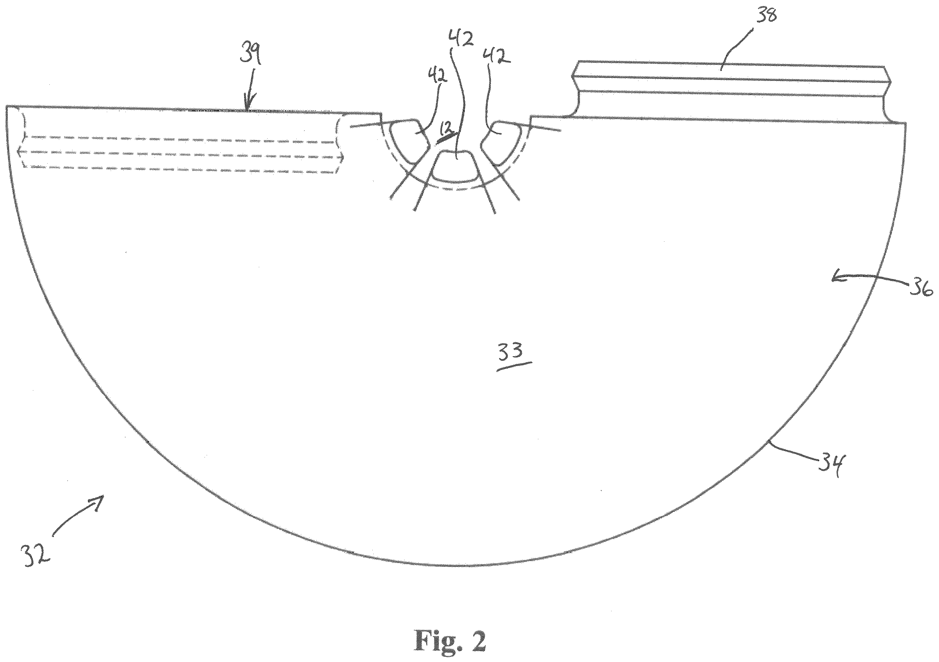

Referring to figures 1-3, an embodiment of a protective device 10 according to the present invention is shown in detail. In figure 1 the protective device 10 is shown comprising a first part 20 and a second part 32.

The first part 20 comprises a first neck part 29. The first neck part 29 is preferably designed with at least one, but preferably a plurality of first flexible elements 30.

The first flexible elements 30 are designed so that they will form a longitudinal opening in a longitudinal direction of the first neck portion 29 (i.e. in a substantially vertical direction when the protective device 10 is attached to a tree seedling that has been planted) where a cross-section of the opening forms one half of a substantially circularly shaped opening 12 when the first part 20 and the second part 32 are connected to each other.

The first flexible elements 30 are further designed so that they will press against the stem 49 of a tree seedling 46 when the protective device 10 is attached to the tree seedling. The flexibility of the first flexible elements 30 will also accommodate the increasing size of the stem 49 of a tree seedling 46 as the tree seedling grows.

The first part 20 is further provided with a first collar part 21 that that is securely attached to the first neck part 29. Preferably the first neck part 29 and the first collar part 21 are formed integrally in one piece as indicated in the figures, but the first neck part 29 and the first collar part 21 may be formed as separate parts comprising suitable attachment means such that the first collar part 21 can be attached to the first neck part 29.

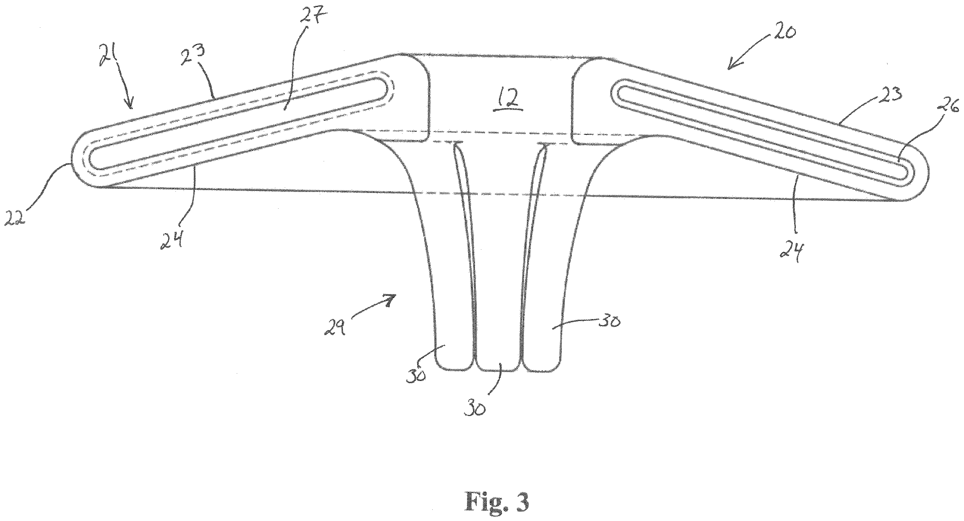

The first collar part 21 extends outwards in a radial direction from the first neck part 29. The first collar part 21 is preferably inclined downwards in the longitudinal direction relative to the neck portion, from the first neck part 29 towards an outer circumference 22 of the first collar part 21 as indicated in figure 3. The first collar part 21 further comprises a first upper side 23 and a first underside 24.

As shown in the figures, the first collar part is further provided with a first male locking member 26 and a first female locking member 27.

The second part 32 comprises a second neck part 41. The second neck part 41 is preferably designed with at least one, but preferably a plurality of second flexible elements 42.

The second flexible elements 42 are designed so that they will form a longitudinal opening in a longitudinal direction of the second neck portion 41 (i.e. in a substantially vertical direction when the protective device 10 is attached to a tree seedling that has been planted) where a cross-section of the opening forms one half of a substantially circularly shaped opening 12 when the first part 20 and the second part 32 are connected to each other.

The second flexible elements 42 are further designed so that they will press against the stem 49 of a tree seedling 46 when the protective device 10 is attached to the tree seedling. The flexibility of the second flexible elements 42 will also accommodate the increasing size of the stem 49 of a tree seedling 46 as the tree seedling grows.

The second part 32 is further provided with a second collar part 33 that that is securely attached to the second neck part 41. Preferably the second neck part 41 and the second collar part 33 are formed integrally in one piece as indicated in the figures, but the second neck part 41 and the second collar part 33 may be formed as separate parts comprising suitable attachment means such that the second collar part 33 can be attached to the second neck part 41.

The second collar part 33 extends outwards in a radial direction from the second neck part 41. The second collar part 33 is preferably inclined downwards in the longitudinal direction relative to the neck portion, from the second neck part 41 towards an outer circumference 34 of the second collar part 33 as indicated in figure 1. The second collar part 33 further comprises a second upper side 35 and a second underside 36.

The second collar part is further provided with a second male locking member 26 and a second female locking member 27.

When the first part 20 is connected to the second part 32, the first male locking member 26 will enter the complementary shaped second female locking member 39 on the second part 32 and the second male locking member 38 will enter the complementary shaped first female locking member 27. The first male locking member and the second male locking member 38 can each be formed with a rib as indicated in the figures and the first female locking member 27 and the second female locking member 39 can each be formed with correspondingly shaped grooves as indicated in the figures such that the first male locking member 26 is locked in its position in the second female locking member 39 and the second male locking member 38 is locked in the first female locking member 27 when the first part 20 and the second part 32 are connected to each other.

The corresponding male locking members 26, 38 and female locking members 27, 39 that are adapted to be interlocked when the first part 20 and the second part 32 of the protective device 10 are attached to each other, are preferably designed to unlock when a certain pressure is applied to the connection of interlocked male locking members 26, 38 and female locking members 27, 39 due to increased size of the stem 49 as the tree seedling 46 grows.

To simplify the production of the protective device 10, the first part 20 and the second part 32 are preferably formed so that they are substantially identical as shown in the figures.

When the first part 20 and the second part 32 are connected to each other and onto the stem 49 of a tree seedling 46, the stem 49 will pass through the opening 12 and the first flexible elements 30 of the first neck part 29 and the second flexible elements 42 of the second neck part 41, which will be spread substantially evenly around the circumference of the stem 49 of tree seedling 46, will press firmly against the stem 49 and make sure that the protective device 10 is kept in its intended position on the stem 49.

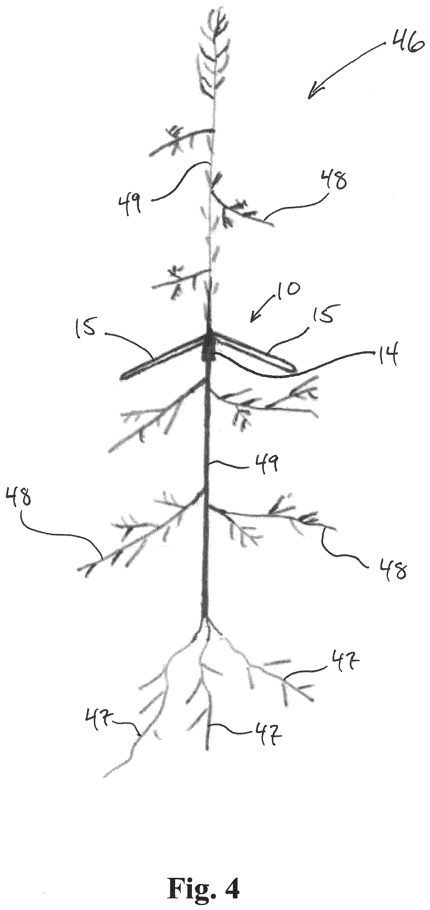

In figures 4-7 there are shown various embodiments of the tree seedling 46 and the protective device 10 attached to the stem 49 of the tree seedling 46. The tree seedlings 46 are shown with their branches 48 and their roots 47.

In figure 4, the tree seedling 46 is shown with a protective device 10 with a collar part 15 and a neck part 14, attached to the stem 49 of the tree seedling 46. The protective device 10 is not provided with any layer 16 of sticky material and the stem 49 of the tree seedling 46 is not provided with a protective coating layer 17 on the stem 49 in this embodiment.

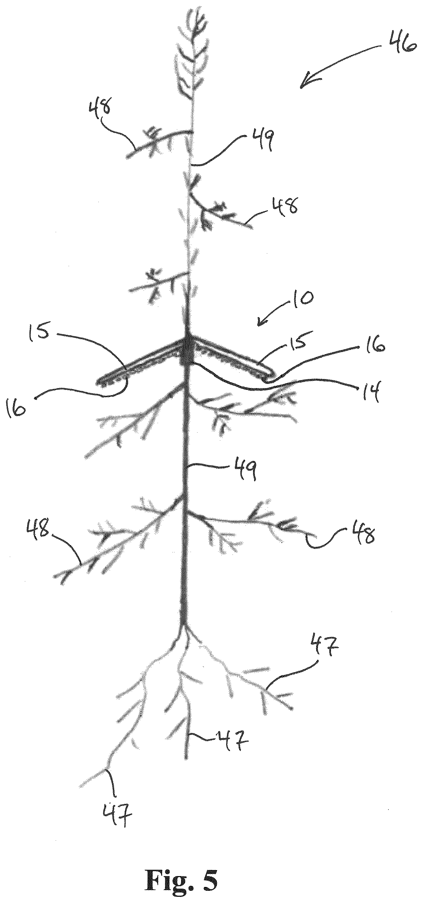

In figure 5, the tree seedling 46 is shown with a protective device 10 with a collar part 15 and a neck part 14, attached to the stem 49 of the tree seedling 46. The protective device 10 is further provided with a layer 16 of sticky material arranged on the collar part 15, on the first underside 24 of the first collar part 21 and on the second underside 36 of the second collar part 33, such that preferably substantially the entire underside 36 of the collar part 15 is provided with the layer 16 of sticky material. The tree seedling 46 is not provided with a coating layer 17 on the stem 49 in this embodiment.

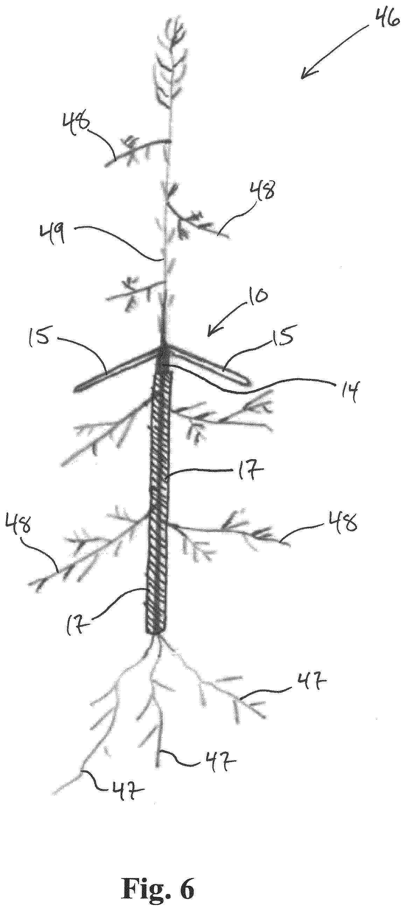

In figure 6, the tree seedling 46 is shown with a protective device 10 attached to the stem 49 of the tree seedling 46. The protective device 10 is further provided with a coating layer 17 on the stem 46 that protects the stem against non-flying insects such as weevils. The coating layer 17 preferably extends from the roots 47 to the neck part 14 of the protective device 10. The coating layer 17 is preferably made of wax, but any suitable material can be used as long as it will prevent non-flying insects, such as weevils, from damaging the stem 49 and is sufficiently elastic to accommodate increased size of the stems 49 as the tree seedlings 46 grow. The protective device 10 is not provided with any layer 16 of sticky material in this embodiment.

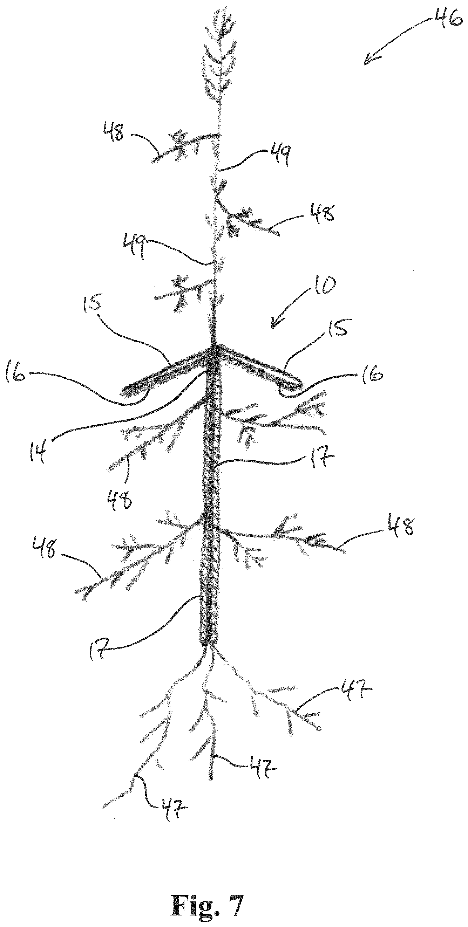

Finally, in figure 7, the tree seedling 46 is shown with a protective device 10 with a collar part 15 and a neck part 14, attached to the stem 49 of the tree seedling 46. The protective device 10 is further provided with a layer 16 of sticky material arranged on the collar part 15, on the first underside 24 of the first collar part 21 and on the second underside 36 of the second collar part 33, such that preferably substantially the entire underside 36 of the collar part 15 is provided with the layer 16 of sticky material. The tree seedling 46 is further provided with a coating layer 17 on the stem 46 where the coating layer 17 extends from the roots 47 to the neck part 14 of the protective device 10. The coating layer 17 is preferably made of wax, but any suitable material can be used as long as it will prevent non-flying insects, such as weevils, from damaging the stem 49 and is sufficiently elastic to accommodate increased size of the stems 49 as the tree seedlings 46 grow.

The invention has now been explained with reference to a non-limiting example. A person skilled in the art will, however, appreciate that modifications and changes may be made to this embodiment which will be within the scope of the invention as defined in the following claims.

## Claims

1. A protective device (10) for protection of a tree seedling (46) with a stem (49) against non-flying insects, the protective device (10) comprising a neck part (14) that is provided with a central, through-going opening (12) for the stem (49), the neck part (14) being adapted to hold the protective device (10) firmly against stem (49) of the tree seedling (46), the protective device (10) further comprising a collar part (15) that projects outwards from the neck part (14),
**characterized in that** an underside (24, 36) of the collar part (15) is provided with a layer (16) of a sticky material, the layer extending around the entire collar part (15) in a circumferential direction and over at least a part of the collar part (15) in a radial direction.

2. Protective device according to claim 1,
**characterized in that** the underside (24, 36) of the collar part (15) is substantially completely covered with a layer (16) of a sticky material.

3. Protective device according to claim 1 or 2,
**characterized in that** the sticky material is a natural or synthetic resin, a synthetic polymer or a combination of two or more materials from these two groups with oil.

4. Protective device according to one of the claims 1-3,
**characterized in that** the collar part (15) is inclined downwards relative to the neck part (14) from the neck part (14) towards an outer circumference (22, 34) of the collar part (15) when the protective device (10) is attached to the tree seedling (46).

5. Protective device according to one of the claims 1-4,
**characterized in that** the protective device (10) is made up of a first part (20) comprising a first collar part (21) and a first neck part (29), and a second part (32) comprising a second collar part (33) and a second neck part (41), where the first collar part (21) and the second collar part (33) and/or the first neck part (29) and the second neck part (41) is provided with complementary shaped locking parts (26, 27, 38, 39) such that the first part (20) can be securely fastened to the second part (32) of the protective device (10).

6. Protective device according to claim 5,
**characterized in that** the first collar part (21) of the first part (20) comprises a first male locking member (26) and a first female locking member (27) and that the second collar part (33) of the second part (32) comprises a second male locking member (38) that is complementary shaped to the first female locking member (27) of the first collar part (21), and a second female locking member (39) that is complementary shaped to the first male locking member (26) of the first collar part (21).

7. Protective device according to one of the claims 1-6,
**characterized in that** the neck part (14) comprises a plurality of flexible elements (30, 42) that are adapted to press firmly against the stem (49) of the tree seedling (46) when the protective device (10) is attached to the tree seedling.

8. Protective device according to one of the claims 1-7,
**characterized in that** protective device (10) is made of a plastic material, a biodegradable plastic material or a paper material or wood fibers.

9. A protective system for protection of a tree seedling (46) with a stem (49) against non-flying insects, the protective system comprising a tree seedling (46) that is provided with a protective device (10) according to any one of claims 1-8, and the stem (49) of the tree seedling (46) being provided with a coating layer (17) extending from the roots (47) of the tree seedling (46) to the neck part (14) of the protective device (10).

10. A method for protecting a tree seedling (46) with a stem (49) against non-flying insects, wherein the tree seedling (46) is provided with a protective device (10) according to any one of claims 1-8.

11. A method according to claim 10,
**characterized in that** the stem (49) of the tree seedling (46) is provided with a coating layer (17) extending from the roots (47) of the tree seedling (46) to the neck part (14) of the protective device (10).

12. Use of a protective device (10) according to any one of claims 1-8 for protection of conifer seedlings (46).

13. Use of a protective device (10) according to claim 12 for protection of conifer seedlings (46) against the pine weevil.

14. Use of a method according to claim 10 or 11 for protection of conifer seedlings (46).

15. Use of a method according to claim 14 for protection of conifer seedlings (46) against the pine weevil.
